(19) Europäisches Patentamt / European Patent Office / Office européen des brevets

(11) **EP 3 637 769 B1**

(12) **EUROPEAN PATENT SPECIFICATION**

(45) Date of publication and mention
of the grant of the patent:
**20.04.2022 Bulletin 2022/16**

(21) Application number: **18903034.9**

(22) Date of filing: **28.09.2018**

(51) International Patent Classification (IPC):
*H04N 19/14* (2014.01)    *H04N 17/00* (2006.01)
*H04N 19/159* (2014.01)    *H04N 19/107* (2014.01)
*H04N 19/109* (2014.01)    *H04N 19/11* (2014.01)
*H04N 19/176* (2014.01)    *H04N 19/61* (2014.01)

(52) Cooperative Patent Classification (CPC):
**H04N 17/004; H04N 19/107; H04N 19/109;
H04N 19/11; H04N 19/14; H04N 19/159;
H04N 19/176; H04N 19/61**

(86) International application number:
**PCT/CN2018/108241**

(87) International publication number:
**WO 2020/042268 (05.03.2020 Gazette 2020/10)**

(54) **METHOD AND DEVICE FOR DETERMINING VIDEO FRAME COMPLEXITY MEASURE**

VERFAHREN UND VORRICHTUNG ZUR BESTIMMUNG DER KOMPLEXITÄT EINES VIDEOBILDES

PROCÉDÉ ET DISPOSITIF POUR DÉTERMINER UNE MESURE DE COMPLEXITÉ DE TRAME VIDÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2018 CN 201811011680**

(43) Date of publication of application:
**15.04.2020 Bulletin 2020/16**

(73) Proprietor: **Wangsu Science & Technology Co.,
Ltd.
Shanghai 200030 (CN)**

(72) Inventors:
• **HUANG, Xuehui**
**Xuhui District, Shanghai 200030 (CN)**
• **LV, Shibiao**
**Xuhui District, Shanghai 200030 (CN)**

(74) Representative: **de Arpe Fernandez, Manuel et al
Arpe Patentes y Marcas
Alcalá, 26, 5ª Planta
28014 Madrid (ES)**

(56) References cited:
EP-A2- 2 242 276    WO-A2-2006/099082
CN-A- 101 926 178    CN-A- 102 984 541
US-A1- 2015 319 437    US-A1- 2015 319 437
US-A1- 2017 070 555

**Description**

FIELD OF THE DISCLOSURE

The present invention relates to the field of Internet technologies and, more particularly, relates to a method and an apparatus for determining complexity of a video frame.

BACKGROUND

As the Internet technologies continue to advance, a substantial number of webcast platforms have emerged. A webcast platform brings a real-time video experience to a user and at the same time raises the requirement for user's network bandwidth. Currently, the webcast platform often limits a bit rate of a live video stream, such that the limited bit rate may adapt to the bandwidth provided by the user's network and may provide a smooth video experience to the user.
Currently, a setting of the bit rate of the live video stream may depend on an analysis of a picture complexity of the live video stream. However, existing methods of complexity analysis do not provide a sufficient precision.
The document US 2015/319437 A1 describes techniques related to constant quality video coding. These techniques may include determining a quantization parameter for a frame of a video sequence, modifying the quantization parameter based on a spatial complexity or a temporal complexity associated with the video frame, and generating a block level quantization parameter for a block of the video frame based on the modified frame level quantization parameter, a complexity of the block, and a complexity of the video frame.

BRIEF SUMMARY OF THE DISCLOSURE

The objective of the present application is to provide a method and an apparatus for determining complexity of a video frame to improve the precision of complexity determination. The invention is described according to the claims.
It can be seen from the above that, when determining the complexity of the video frame, the technical solution provided by the present application may first divide the current video frame into a specified number of picture blocks to reduce an amount of data to be processed each time. For each picture block, an interframe prediction value and an intraframe value of the picture block may be calculated respectively. Based on the calculated interframe prediction value and the intraframe prediction value, time complexity and space complexity of the picture block may be determined respectively. The time complexity may reflect a degree of picture change between the current video frame and the immediately preceding video frame while the space complexity may reflect a degree of complexity of texture details in the current video frame. Then, the smaller of the time complexity and the space complexity may become the complexity of the picture block. Because the current video frame is composed of the specified number of the picture blocks, after the complexity of each picture block is determined, an overall complexity of the current video frame may eventually be determined based on the complexity of each of the specified number of the picture blocks. It can be seen from the above that the technical solution provided by the present application may divide the current video frame into multiple picture blocks to ensure that the amount of the data processed each time is not too large. The technical solution may improve the efficiency of data processing, at the same time avoid calculation errors caused by excessively large amount of data to be processed each time, and hence improve a calculation precision of the overall complexity. In addition, determining the complexity of the current video frame based on tow dimensions of the time complexity and the space complexity may be applicable to various types of video frames, thereby further improving the calculation precision of the overall complexity.

BRIEF DESCRIPTION OF THE DRAWINGS

In order to more clearly illustrate the technical solutions in the embodiments of the present invention, drawings used in the description of the embodiments will be briefly described below. Obviously, the drawings in the following description are only some embodiments of the present invention. Other drawings may also be obtained by those of ordinary skill in the art without inventive work.

FIG. 1 illustrates a flow chart of an exemplary method for determining complexity of a video frame according to disclosed embodiments;

FIG. 2 illustrates a block diagram of an exemplary apparatus for determining complexity of a video frame according to disclosed embodiments; and

FIG. 3 illustrates a schematic diagram of an exemplary apparatus for determining complexity of a video frame according to disclosed embodiments.

## DETAILED DESCRIPTION

To make the objectives, technical solutions, and advantages of the present invention clearer, the following further describes the embodiments of the present invention in details with reference to the accompanying drawings.

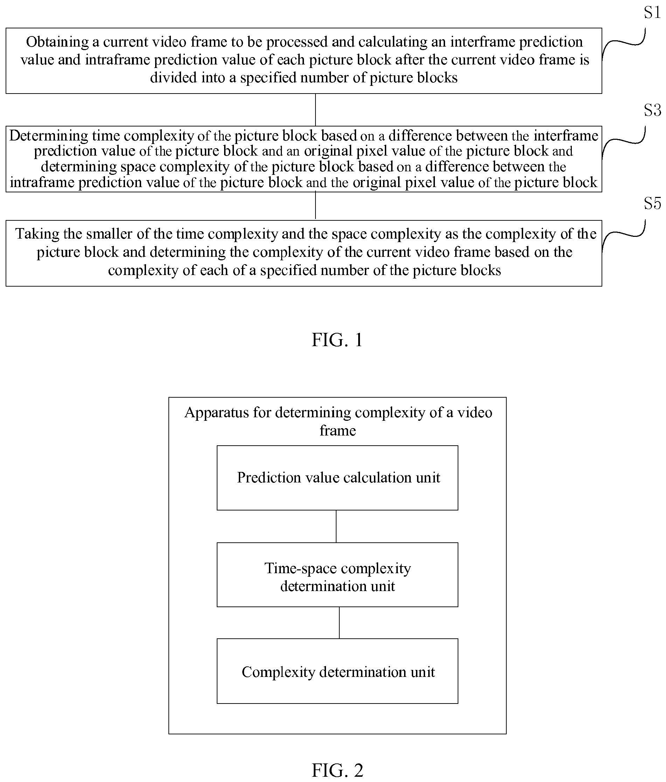

The present application provides a method for determining complexity of a video frame. Referring to FIG. 1, the method may include the following steps.

Step S1: obtaining a current video frame to be processed and calculating an interframe prediction value and intraframe prediction value of each picture block after the current video frame is divided into a specified number of picture blocks.

In one embodiment, when analyzing complexity of the current video frame, to reduce an amount of data processed each time, the current video frame may be divided into the specified number of the picture blocks. The divided picture blocks may have an equal size. In addition, the size of the divided picture blocks may be determined according to a video coding format corresponding to the current video frame. Specifically, the size of the divided picture blocks may be the same as a size of a maximum coding unit of the video coding format. For example, assuming the video coding format corresponding to the current video frame is a H.264 coding format, the size of the divided picture blocks may be 16*16. In another example, assuming the video coding format corresponding to the current video frame is a H.265 coding format, the size of the divided picture blocks may be 64*64. The size of the picture blocks may be defined in pixels. The picture block of 16*16 may include 16 pixels in both a horizonal direction and a vertical direction.

In one embodiment, considering that an actual resolution of the current video frame may be large or small, if the picture blocks are divided purely according to the coding format, the size of the divided picture blocks may not be appropriate. For example, if the resolution of the current video frame is small, the size of the picture blocks divided according to the above method may appear too large. In another example, if the resolution of the current video frame is large, the size of the picture blocks divided according to the above method may appear too small. Thus, in practical applications, after the size of the picture blocks are determined according to the video coding format, the size of the picture blocks may be adjusted according to the actual resolution of the current video frame. For example, if the size of the divided picture blocks are too large, the size of the picture blocks may be appropriately reduced to yield more divided picture blocks. On the contrary, if the size of the divided picture blocks are too small, the size of the picture blocks may be appropriately increased to yield less divided picture blocks.

In one embodiment, after the current video frame having a substantially large resolution is divided into a plurality of picture blocks, the amount of data to be processed for each picture block may still be substantially large. In this case, the current video frame may be down sampled in advance to reduce the resolution of the current video frame, thereby reducing the amount of data to be processed subsequently. Specifically, after the current video frame to be processed is obtained, the resolution of the current video frame may be recognized. If the resolution is greater than or equal to a specified resolution threshold, it indicates that the resolution of the current video frame is too large. At this point, the current video frame may be down sampled to obtain a down-sampled video frame. For example, the current video frame may have a resolution 1280*720. The current video frame may be down sampled to have a resolution 640*360. For the original current video frame, the size of the corresponding picture blocks may be determined according to the video coding format. For example, the current video frame in the resolution 1280*720 may correspond to a 16*16 size of the picture blocks. After the current video frame is down sampled, the corresponding size of the picture blocks may be reduced. Specifically, the resolution of the down-sampled video frame may be divided by the resolution of the original video frame to obtain a down-sampling coefficient. Then, the down-sampling coefficient may be used to convert the original size of the picture blocks to obtain the size of the picture blocks corresponding to the down-sampled video frame. For example, after the current video frame having the resolution 1280*720 is down sampled to have the resolution 640*360, the size of the corresponding picture blocks may be reduced from the 16*16 to 8*8. In one embodiment, after the original current video frame is down sampled to obtain the down-sampled video frame, the complexity of the down-sampled video frame may be used as the complexity of the current video frame.

In one embodiment, when determining the complexity of the current video frame or the down-sampled video frame, complexities of each of the divided picture blocks may be calculated in advance. Then, the complexities of each of the divided picture blocks may be added to obtain the overall complexity of the current video frame. Specifically, when calculating the complexity of each picture block, it is preferred to calculate an interframe prediction value and an intraframe prediction value of each picture block.

In one embodiment, when calculating the interframe prediction value of the picture block, coordinates of a designated vertex of the picture block may be obtained, and a width and a height for characterizing a motion search range may be determined. For example, the designated vertex may be an upper left corner of the picture block. The coordinates of the designated vertex may be denoted by $(y, x)$, where $x$ is a horizontal coordinate of the designated vertex and $y$ is a vertical coordinate of the designated vertex. The motion search may refer to a process of searching a picture block in a preceding video frame similar to the picture block in the current video frame. In practical applications, the motion search may often be confined to a range defined by the width and height of the motion search range described previously.

In one embodiment, the coordinates of the designated vertex and the width and height of the motion search range may be used to determined multiple sets of search parameters. Each set of search parameters may include the horizontal and vertical coordinates. Specifically, in one practical example, the following formulas may be used to determine the multiple sets of the search parameters:

$$|y - y_0| \le SH \; ;$$

and

$$|x - x_0| \le SW \; ,$$

where $x$ is a horizontal coordinate of the designated vertex, $y$ is a vertical coordinate of the designated vertex, $y_0$ is a vertical coordinate of a search parameter, $SH$ is a height of the motion search range, $x_0$ is a horizontal coordinate of a search parameter, and $SW$ is a width of the motion search range. Coordinates $(y_0, x_0)$ that satisfy the above condition constitute a set of search parameters.

In one embodiment, a search result may be calculated for each set of search parameters, respectively. A search value corresponding to a minimum search result may be an adapted search value. Specifically, in one example, the following formula may be used to determine the adapted search value:

$$\underset{y_0, x_0}{arg\,min} \sum_{s=0}^{bh-1} \sum_{t=0}^{bw-1} |P_p(y + s, x + t) - P_{p-1}(s + y_0, t + x_0)| \; ,$$

where $bh$ is a height of the picture block, $bw$ is a width of the picture block, $s$ is an integer from 0 to $bh$ -1, $t$ is an integer from 0 to $bw$ -1, $P_p(y + s, x + t)$ is a pixel value of a pixel at coordinates (y + s, x + t) in the current video frame, and $P_{p-1}(s + y_0, t + x_0)$ is a pixel value of a pixel at coordinates $(s+y_0, t+x_0)$ in the video frame immediately preceding the current video frame.

As such, a final adapted search value may be obtained by substituting different search values into the above formula.

In one embodiment, after the adapted search value is determined, the interframe prediction value of the picture block may be determined based on the pixel value of the pixel in the video frame immediately preceding the current video frame and the adapted search value. Specifically, in one example, the following formula may be used to determine the interframe prediction value of the picture block:

$$B_{inter}(i,j) = P_{p-1}(i + y_0, j + x_0) \; ,$$

where $B_{inter}(i,j)$ is the interframe prediction value corresponding to the pixel at coordinates $(i,j)$ in the picture block, $P_{p-1}(i + y_0, j + x_0)$ is the pixel value of the pixel at coordinates $(i + y_0, j + x_0)$ in the video frame immediately preceding the current video frame, $i$ is an integer from 0 to $bh$ -1, and $j$ is an integer from 0 to $bw$-1.

As such, the determined interframe prediction value may be a matrix. Each element in the matrix may correspond to each pixel in the picture block.

In one embodiment, when calculating the intraframe prediction value of the picture block, a current intraframe prediction method may be used to determine candidate prediction values in a plurality of specified directions. Specifically, the current intraframe prediction method may be implemented in an intraframe prediction mode in an encoding process of coding formats such as H.264, H.265, or VP9, etc. The existing intraframe prediction mode may produce different candidate prediction values for different prediction directions. In one embodiment, only the horizontal direction, the 45° angular direction, the vertical direction, and the 135° angular direction may be selected as the specified directions to calculate the candidate prediction values. A corresponding evaluation value may be calculated for the candidate prediction value in each specified direction, respectively. In one example, the following formula may be used to calculate the evaluation value corresponding to a candidate prediction value in a target specified direction among the candidate prediction values in the plurality of specified directions:

$$SAD = \sum_{s=0}^{bh-1} \sum_{t=0}^{bw-1} \left| P_p(y + s, x + t) - C_{intra}(s,t) \right|,$$

where *SAD* is the evaluation value corresponding to the candidate prediction value in the target specified direction, *bh* is the height of the picture block, *bw* is the width of the picture block, *s* is an integer from 0 to *bh* -1, *t* is an integer from 0 to *bw* -1, $C_{intra}(s, t)$ is the candidate prediction value of the pixel at coordinates (*s, t*) in the target specified direction, and $P_p$ *(y + s, x + t)* is the pixel value of the pixel at coordinates (y + *s, x + t*) in the current video frame.

In one embodiment, the above formula may be used to calculate the evaluation value corresponding to the candidate prediction value in each specified direction. Then, the candidate prediction value corresponding to a minimum evaluation value may become the intraframe prediction value of the picture block.

Step S3: determining time complexity of the picture block based on a difference between the interframe prediction value of the picture block and an original pixel value of the picture block and determining space complexity of the picture block based on a difference between the intraframe prediction value of the picture block and the original pixel value of the picture block.

In one embodiment, after the interframe prediction value and the intraframe prediction value of the picture block are calculated, the corresponding time complexity and space complexity may be calculated. The time complexity may reflect a degree of picture change between the current video frame and the immediately preceding video frame while the space complexity may reflect a degree of complexity of texture details in the current video frame.

In one embodiment, the time complexity of the picture block may be determined based on the difference between the interframe prediction value of the picture block and the original pixel value of the picture block. Specifically, the interframe prediction value of the picture block may be a matrix. Each element of the matrix may one-to-one correspond to each pixel in the picture block. Thus, when calculating the difference between the interframe prediction value of the picture block and the original pixel value of the picture block, an element of the interframe prediction value may be subtracted from a corresponding element of the pixel value at the same position to obtain a difference at the position. As such, the obtained difference may also be a matrix. In one embodiment, after the difference in the form of the matrix is calculated, a discrete cosine transformation may be performed on the difference. A sum of the absolute values of coefficients after the discrete cosine transformation may become the time complexity of the picture block.

Similarly, when calculating the space complexity, the discrete cosine transformation may be performed on the difference between the interframe prediction value of the picture block and the original pixel value of the picture block. A sum of the absolute values of coefficients after the discrete cosine transformation may become the space complexity of the picture block.

Step S5: taking the smaller of the time complexity and the space complexity as the complexity of the picture block and determining the complexity of the current video frame based on the complexity of each of a specified number of the picture blocks.

In one embodiment, after the time complexity and the space complexity of the picture block is obtained, the smaller of the time complexity and the space complexity may become the complexity of the picture block. As such, because the current video frame is composed of the specified number of the picture blocks, the complexity of the current video frame may be determined based on the complexity of each of the specified number of the picture blocks. Specifically, the complexity of each of the picture blocks may be added together to obtain the complexity of the current video frame and to complete the process for determining the complexity of the current video frame. In one embodiment, the process for analyzing the complexity of the current video frame may be performed before the current video frame is encoded. Specifically, in practical applications, if no internal information of an encoder in the encoding process is used, a picture complexity of the current video frame may be first analyzed before the current video frame is inputted to the encoder for encoding. On the other hand, if the internal information of the encoder in the encoding process is used, the current vide frame may be inputted directly to the encoder. After the encoder recognizes a frame type of the current video frame, the picture complexity of the current video frame may be analyzed. The internal information may include the frame type of the current video frame recognized by the encoder. If no internal information is used, it indicates that the frame type of the current video frame is unknown when the picture complexity of the current video frame is analyzed. On the other hand, if the internal information is used, it indicates that the frame type of the current video frame is determined when the picture complexity of the current video frame is analyzed. The frame type of the current video frame may include a B-frame, an I-frame, and a P-frame. The I-frame may be referred to as an internal picture frame or a key frame. The I-frame may be an independent frame, independent of other adjacent video frames. The P-frame may be referred to as a forward search frame. The B-frame may be referred to as a bi-directional search frame. The P-fiame and the B-frame may be dependent on the immediately preceding video frame or the two immediately adjacent video frames.

In one embodiment, if the frame type of the current video frame is unknown or is recognized not to be an internal picture frame (I-frame), it indicates that the current video frame is dependent on other video frames. At this point, the above formula may be required to calculate the interframe prediction value and the intraframe prediction value of the picture block and to determine the time complexity that reflects the degree of picture change between the current video frame and the immediately preceding video frame and the space complexity that reflects the degree of complexity of the texture details in the current video frame. On the other hand, if the current video frame is recognized to be an internal picture frame (I-frame), it indicates that the current video frame is independent on other video frames. Thus, it is not required to determine the time complexity. Only the intraframe prediction value of the picture block need to be calculated. The complexity of the picture block may include only the space complexity determined based on the difference between the intraframe prediction value of the picture block and the original pixel value of the picture block.

It can be seen from the above that the technical solution provided by the present application may precisely analyze the picture complexity regardless of the use of the internal information of the encoder in the encoding process, thereby independent of the internal information of the encoder.

Referring to FIG. 2, the present application also provides an apparatus for determining complexity of a video frame. The apparatus may include a prediction value calculation unit, a time-space complexity determination unit, and a complexity determination unit. The prediction value calculation unit may be configured to obtain a current video frame to be processed and to calculate an interframe prediction value and an intraframe prediction value of a picture block after the current video frame is divided into a specified number of picture blocks. The time-space complexity determination unit may be configured to determine time complexity of the picture block based on a difference between the interframe prediction value of the picture block and an original pixel value of the picture block and space complexity of the picture block based on a difference between the intraframe prediction value of the picture block and the original pixel value of the picture block. The complexity determination unit may be configured to take the smaller of the time complexity and the space complexity as the complexity of the picture block and to determine the complexity of the current video frame based on the complexity of each of the specified number of the picture blocks.

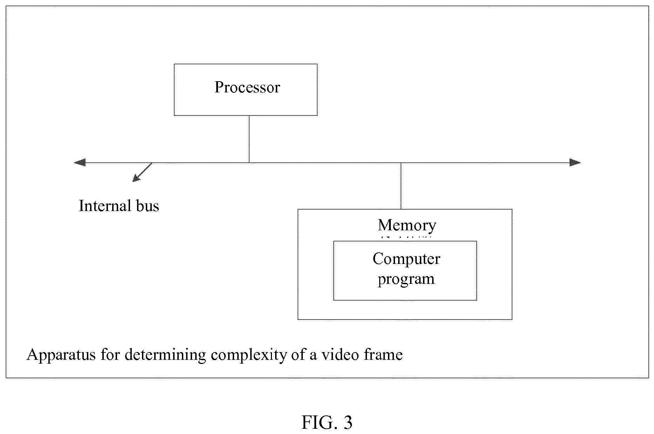

Referring to FIG. 3, the present application also provides another apparatus for determining complexity of a video frame. The apparatus may include a memory and a processor. The memory may be configured to store a computer program. When executed by the processor, the computer program may implement the disclosed method for determining complexity of a video frame.

It can be seen from the above that, when determining the complexity of the video frame, the technical solution provided by the present application may first divide the current video frame into a specified number of picture blocks to reduce an amount of data to be processed each time. For each picture block, an interframe prediction value and an intraframe value of the picture block may be calculated respectively. Based on the calculated interframe prediction value and the intraframe prediction value, time complexity and space complexity of the picture block may be determined respectively. The time complexity may reflect a degree of picture change between the current video frame and the immediately preceding video frame while the space complexity may reflect a degree of complexity of texture details in the current video frame. Then, the smaller of the time complexity and the space complexity may become the complexity of the picture block. Because the current video frame is composed of the specified number of the picture blocks, after the complexity of each picture block is determined, an overall complexity of the current video frame may eventually be determined based on the complexity of each of the specified number of the picture blocks. It can be seen from the above that the technical solution provided by the present application may divide the current video frame into multiple picture blocks to ensure that the amount of the data processed each time is not too large. The technical solution may improve the efficiency of data processing, at the same time avoid calculation errors caused by excessively large amount of data to be processed each time, and hence improve a calculation precision of the overall complexity. In addition, determining the complexity of the current video frame based on tow dimensions of the time complexity and the space complexity may be applicable to various types of video frames, thereby further improving the calculation precision of the overall complexity.

Through the description of the above embodiments, those skilled in the art may clearly understand that the embodiments may be implemented in software on a general-purpose hardware platform or implemented in hardware. Based on such understanding, the above described technical solution or the contribution beyond the existing technology may be embodied in the form of software product. The software product may be stored in a computer readable storage medium such as a ROM/RAM, a magnetic disk, or an optical disk, etc. The software product may include program instructions to be executed by a computer (e.g., a personal computer, a server, or a network device, etc.) to implement various method embodiments or portions of various method embodiments.

It should be understood by those skilled in the art that the foregoing are merely certain preferred embodiments of the present invention and are not intended to limit the present invention.

**Claims**

1. A method for determining complexity of a video frame in a live video stream, comprising:

    obtaining (S1) a current video frame to be processed, dividing the current video frame into a specified number of picture blocks;
when a frame type of the current video frame is unknown or is recognized not to be an I-frame,

calculating (S1) an interframe prediction value and an intraframe prediction value of a picture block,
determining (S3) time complexity of the picture block based on a difference between the interframe prediction value of the picture block and an original pixel value of the picture block and determining space complexity of the picture block based on a difference between the intraframe prediction value of the picture block and the original pixel value of the picture block, and
taking (S4) the smaller of the time complexity and the space complexity as a complexity of the picture block;

when the frame type of the current video frame is recognized to be the I-frame,

calculating only the intraframe prediction value of the picture block,
determining the space complexity of the picture block based on a difference between the intraframe prediction value of the picture block and the original pixel value of the picture block, and
taking the space complexity as the complexity of the picture block; and

adding the complexity of each of the picture blocks together to obtain the complexity of the current video frame, wherein the obtained complexity is used for setting a bit rate of the live video stream,
wherein determining the time complexity of the picture block includes:
performing a discrete cosine transformation on the difference between the interframe prediction value of the picture block and the original pixel value of the picture block and taking a sum of the absolute values of coefficients after the discrete cosine transformation as the time complexity of the picture block; and
wherein determining the space complexity of the picture block includes:
performing a discrete cosine transformation on the difference between the intraframe prediction value of the picture block and the original pixel value of the picture block and taking a sum of the absolute values of coefficients after the discrete cosine transformation as the space complexity of the picture block.

2. The method of claim 1, wherein calculating the interframe prediction value of the picture block includes:

obtaining coordinates of a designated vertex of the picture block and determining a width and a height of a motion search range;
based on the coordinates of the designated vertex and the width and height of the motion search range, determining multiple sets of search parameters, wherein each set of search parameters includes horizontal and vertical coordinates;
calculating a corresponding search result for each set of search parameters respectively and taking a search value corresponding to a minimum search result as an adapted search value; and
based on the pixel value in the video frame immediately preceding the current video frame and the adapted search value, determining the interframe prediction value of the picture block.

3. The method of claim 2, wherein multiple sets of search parameters are determined based on the following formulas:

$$|y - y_0| \leq SH \; ;$$

and

$$|x - x_0| \leq SW \; ,$$

wherein $x$ is a horizontal coordinate of the designated vertex, $y$ is a vertical coordinate of the designated vertex, $y_0$ is a vertical coordinate of a search parameter, $SH$ is the height of the motion search range, $x_0$ is a horizontal coordinate of a search parameter, and $SW$ is the width of the motion search range.

4. The method of claim 3, wherein an adapted search value is determined based on the following formula:

$$argmin_{y_0,x_0} \sum_{s=0}^{bh-1} \sum_{t=0}^{bw-1} \left| P_p(y + s, x + t) - P_{p-1}(s + y_0, t + x_0) \right|,$$

wherein $bh$ is a height of the picture block, $bw$ is a width of the picture block, $s$ is an integer from 0 to $bh$ -1, $t$ is an integer from 0 to $bw$ -1, $P_p(y + s, x + t)$ is a pixel value of a pixel at coordinates $(y + s, x + t)$ in the current video frame, and $P_{p-1}(s+y_0, t+x_0)$ is a pixel value of a pixel at coordinates $(s+y_0, t+x_0)$ in the video frame immediately preceding the current video frame.

5. The method of claim 4, wherein the interframe prediction value of the picture block is determined based on the following formula:

$$B_{inter}(i, j) = P_{p-1}(i + y_0, j + x_0),$$

wherein $B_{inter}(i,j)$ is the interframe prediction value corresponding to a pixel at coordinates $(i,j)$ in the picture block, $P_{p-1}(i+y_0, j +x_0)$ is the pixel value of a pixel at coordinates $(i+y_0, j +x_0)$ in the video frame immediately preceding the current video frame, $i$ is an integer from 0 to $bh$ -1, and $j$ is an integer from 0 to $bw$ -1.

6. The method of claim 1, wherein calculating the intraframe prediction value of the picture block includes:

   obtaining candidate prediction values of the picture block in a plurality of specified directions and calculating an evaluation value corresponding to the candidate prediction value in each specified direction; and
   taking the candidate prediction value corresponding to a minimum evaluation value as the intraframe prediction value of the picture block.

7. The method of claim 6, wherein the evaluation value corresponding to a candidate prediction value in a target specified direction among the candidate prediction values in the plurality of specified directions is determined based on the following formula:

$$\text{SAD} = \sum_{s=0}^{bh-1} \sum_{t=0}^{bw-1} \left| P_p(y + s, x + t) - C_{intra}(s, t) \right|,$$

wherein $SAD$ is the evaluation value corresponding to the candidate prediction value in the target specified direction, $bh$ is the height of the picture block, $bw$ is the width of the picture block, $s$ is an integer from 0 to $bh$ -1, $t$ is an integer from 0 to $bw$ -1, $C_{intra}(s,t)$ is the candidate prediction value of a pixel at coordinates $(s, t)$ in the target specified direction, and $P_p(y + s, x + t)$ is the pixel value of a pixel at coordinates $(y + s, x + t)$ in the current video frame.

8. The method of claim 1, after the current video frame to be processed is obtained, the method further includes:

   recognizing a resolution of the current video frame; and
   down sampling the current video frame to obtain the down-sampled video frame if the resolution is greater than or equal to a specified resolution threshold, wherein the complexity of the down-sampled video frame becomes the complexity of the current video frame.

9. An apparatus for determining complexity of a video frame in a live video stream, comprising:

   a prediction value calculation unit configured to obtain a current video frame to be processed, and to calculate an interframe prediction value and an intraframe prediction value of a picture block after the current video frame is divided into a specified number of picture blocks when a frame type of the current video frame is unknown or is recognized not to be an I-frame, or to calculate only the intraframe prediction value of a picture block after the current video frame is divided into a specified number of picture blocks when the frame type of the current video frame is recognized to be the I-frame;
   a time-space complexity determination unit configured to, when the frame type of the current video frame is unknown or is recognized not to be the I-frame, determine time complexity of the picture block based on a difference between the interframe prediction value of the picture block and an original pixel value of the picture block and space complexity of the picture block based on a difference between the intraframe prediction value of the picture block and the original pixel value of the picture block, or when the frame type of the current video frame is recognized to be the I-frame, determine the space complexity of the picture block based on a difference between the intraframe prediction value of the picture block and the original pixel value of the picture block; and a complexity determination unit configured to, when the frame type of the current video frame is unknown or is recognized not to be the I-frame, take the smaller of the time complexity and the space complexity as the complexity of the picture block, or when the frame type of the current video frame is recognized to be the I-frame, take the space complexity as the complexity of the picture block, and to add the complexity of each of the picture blocks together to obtain the complexity of the current video frame, wherein the obtained complexity is used for setting a bit rate of the live video stream,
wherein the time-space complexity determination unit is further configured to:

perform a discrete cosine transformation on the difference between the interframe prediction value of the picture block and the original pixel value of the picture block and take a sum of the absolute values of coefficients after the discrete cosine transformation as the time complexity of the picture block, and
perform a discrete cosine transformation on the difference between the intraframe prediction value of the picture block and the original pixel value of the picture block and take a sum of the absolute values of coefficients after the discrete cosine transformation as the space complexity of the picture block.

10. A data processing apparatus for determining complexity of a video frame in a live video stream, comprising means for carrying out the method of any of claims 1-8.

**Patentansprüche**

1.  Eine Methode zur Bestimmung der Komplexität eines Videobildes in einem Live-Videostrom, die Folgendes umfasst:

Erhalt (S1) eines aktuellen, zu verarbeitenden Videobildes, Aufteilen des aktuellen Videobildes in eine spezifische Anzahl von Bildblöcken;
wenn ein Bildtyp des aktuellen Videobildes unbekannt ist oder nicht als ein I-Bild erkannt wird,

Berechnung (S1) eines Zwischenbildvoraussagewertes und eines Zwischenbildvoraussagewertes eines Bildblocks,
Bestimmung (S3) der Zeitkomplexität des Bildblocks basierend auf einer Differenz zwischen dem Zwischenbildvoraussagewert des Bildblocks und einem originalen Pixelwert des Bildblocks und Bestimmung der Kapazitätskomplexität des Bildblocks basierend auf einer Differenz zwischen dem Zwischenbildvoraussagewert des Bildblocks und dem originalen Pixelwert des Bildblocks, und
Betrachtung (S4) der geringsten Zeitkomplexität und Kapazitätskomplexität als eine Komplexität des Bildblocks;

wenn der Bildtyp des aktuellen Videobildes als I-Bild erkannt wird,

Berechnung nur des Zwischenbildvoraussagewertes des Bildblocks,
Bestimmng der Kapazitätskomplexität des Bildblocks basierend auf einer Differenz zwischen dem Zwischenbildvoraussagewert des Bildblocks und dem originalen Pixelwert des Bildblocks, und
Betrachtung der Kapazitätskomplexität als Komplexität des Bildblocks; und
Kombinieren der Komplexität eines jeden der Bildblöcke, um die Komplexität des aktuellen Videobildes zu erhalten, wobei die erhaltene Komplexität für das Setzen einer Bitrate des Live-Videostroms benutzt wird, wobei die Bestimmung der Zeitkomplexität des Bildblocks Folgendes einschliesst:

Durchführung einer diskreten Kosinustransformation bei der Differenz zwischen dem Zwischenbildvoraussagewert des Bildblocks und dem original Pixelwert des Bildblocks und
Betrachtung einer Summe der absoluten Koeffizientwerte nach der diskreten Kosinustransformation als die Zeitkomplexität des Bildblocks; und
wobei die Bestimmung der Kapazitätskomplexität des Bildblocks Folgendes einschliesst:
Durchführung einer diskreten Kosinustransfbeormation bei der Differenz zwischen dem Zwischenbildvoraussagewert des Bildblocks und dem originalen Pixelwert des Bildblocks und Betrachtung einer Summe der absoluten Koeffizientwerte nach der diskreten Kosinustransformation als Kapazitätskomplexität des Bildblocks.

2. Die Methode gemäss Anspruch 1, bei der die Berechnung des Zwischenbildvoraussagewertes des Bildblocks Folgendes einschliesst:

Erhalt der Koordinaten eines spezifizierten Scheitelpunktes des Bildblocks und Bestimmung einer Breite und Höhe einer Bewegungssuchbereichsweite;
basierend auf den Koordinaten des spezifizierten Scheitelpunktes und der Breite und Höhe der Bewegungssuchbereichsweite, Bestimmung vielzähliger Reihen von Suchparametern, wobei jede Reihe der Suchparameter horizontale und vertikale Koordinaten einschliesst;
Berechnung eines entsprechenden Suchergebnisses für jeweils jede Reihe von Suchparametern und Betrachtung eines einem Mindestsuchergebnis entsprechenden Suchwertes als ein angepasster Suchwert; und
Basierend auf dem Pixelwert in dem Videobild, das direkt dem aktuellen Videobild vorausgeht, und dem angepassten Suchwert, Bestimmung des Zwischenbildvoraussagewertblocks.

3. Die Methode gemäss Anspruch 2, bei der vielzählige Reihen von Suchparameters basierend auf folgenden Formeln bestimmt werden:

$$|y - y_0| \leq SH ;$$

und

$$|x - x_0| \leq SW ,$$

Wobei x eine horizontale Koordinate des spezifizierten Scheitelpunktes ist, y eine vertikale Koordinate des spezifizierten Scheitelpunktes ist, $y_0$ eine vertikale Koordinate eines Suchparameters ist, SH die Höhe der Bewegungssuchbereichsweite ist, $x_0$ eine horizontale Koordinate eines Suchparamters ist, und SW die Breite der Bewegungssuchbereichsweite ist.

4. Die Methode gemäss Anspruch 3, bei der ein angepasster Suchwert basierend auf folgender Formel bestimmt wird:

$$\underset{y_0, x_0}{argmin} \sum_{s=0}^{bh-1} \sum_{t=0}^{bw-1} |P_p(y + s, x + t) - P_{p-1}(s + y_0, t + x_0)| ,$$

bei der *bh* eine Höhe des Bildblocks, *hw* die Breite des Bildblocks, *s* eine Ganzzahl von 0 bis *bh* - 1, *t* eine Ganzzahl von 0 bis *bw* -1, $P_p$ (y + s, x + t) ein Pixelwert eines Pixels an den Koordinaten (y + s, x + t) in dem aktuellen Videobild und $P_{p-1}(s + y_0, t + x_0)$ ein Pixelwert eines Pixels an den Koordinaten $(s + y_0, t + x_0)$ in dem Videobild, das dem aktuellen Videobild vorausgeht ist.

5. Die Methode gemäss Anspruch 4, bei der der Zwischenbildvoraussagewertbildblock basierend auf folgender Formel bestimmt wird:

$$B_{inter}(i, j) = P_{p-1}(i + y_0, j + x_0) ,$$

Bei der $B_{inter}(i, f)$ der ein, einem Pixel an den Koordinaten *(i, f)* im Bildblock entsprechender Zwischenbildvoraussagewert ist, $P_{p-1}(i + y_0, j + x_0)$ der Pixelwert eines Pixels an den Koordinaten $(i + y_0, j + x_0)$ im Videobild, das direkt dem aktuellen Videobild vorausgeht, ist, *i* eine Ganzzahl von 0 bis *bh* - 1, und *j* eine Ganzzahl von 0 zu *bw* - 1 ist.

6. Die Methode gemäss Anspruch 1, bei der die Berechnung des Zwischenbildvoraussagewertes des Bildblocks Folgendes einschliesst:

Erhalt eines In Frage kommenden Voraussagewertes des Bildblocks in einer Vielzahl von spezifizierten Richtungen und Berechnung eines dem in Frage kommenden Voraussagewert entsprechenden Bewertungswertes in jeder spezifizierten Richtung; und
Betrachtung des einem Minimumbewertungswert entsprechenden, in Frage kommenden Voraussagewertes als Zwischenbildvoraussagewert des Bildblocks.

**7.** Die Methode gemäss Anspruch 6, bei der der einem in Frage kommenden Voraussagewert entsprechende Bewertungswert in einer zielbestimmten Richtung unter den in Frage kommenden Voraussagewerten der Vielzahl von spezifizierten Richtungen basierend auf folgender Formel bestimmt wird:

$$\text{SAD} = \sum_{s=0}^{bh-1} \sum_{t=0}^{bw-1} \left| P_p(y+s, x+t) - C_{intra}(s,t) \right|,$$

bei der *SAD* der dem in Frage kommenden Voraussagewert entsprechende Bewertungswert in der zielbestimmten Richtung ist, *bh* die Höhe des Bildblocks ist, *bw* die Breite des Bildblocks ist, *s* eine Ganzzahl von 0 bis *bh - 1* ist, *t* eine Ganzzahl von 0 bis *bw - 1* ist, $C_{intra}(s, t)$ der in Frage kommende Vraussagewert eines Pixles an den Koordinaten *(s, t)* in der zielbestimmten Richtung ist, und $P_p(y + s, x + t)$ der Pixelwert an den Koordinaten (y + s, x + t) in dem aktuellen Videobild ist.

**8.** Die Methode gemäss Anspruch 1, die, nachdem das zu verarbeitende, aktuelle Videobild erhalten wurde, weiter Folgendes einschliesst:

Erkennen einer Auflösung des aktuellen Videobildes; und
Unterabtastung des aktuellen Videobildes zwecks Erhalt das unterabgetasteten Videobildes, wenn die Auflösung höher ist als oder gleich einem spezifizierten Auflösungsgrenzwert, wobei die Komplexität des unterabgetasteten Videobildes zur Komplexität des aktuellen Videobildes wird.

**9.** Ein Apparat zur Bestimmung der Komplexität eines Videobildes in einem Live-Videostrom, der Folgendes umfasst:

Einen Berechnungseinheit des Voraussagewertes, die konfiguriert ist, um ein aktuelles, zu verarbeitendes Videobild zu erhalten, und einen Zwischenbildvoraussagewert und einen Zwischenbildvoraussagewert eines Bildblocks zu berechnen, nachdem das aktuelle Videobild in eine spezifische Anzahl von Bildblöcken aufgeteilt wurde, wenn ein Bildtyp des aktuellen Videobildes unbekannt ist oder nicht als ein I-Frame erkannt wird. oder, um nur den Zwischenbildvoraussagewert eines Bildblocks zu berechnen, nachdem das aktuelle Videobild in eine spezifische Anzahl von Bildblöcken aufgeteilt wurde, wenn der Bildtyp des aktuellen Videobildes als ein I-Frame erkannt wird;
eine Bestimmungseinheit für die Zeit-Kapazität-Komplexität, die konfiguriert ist, wenn der Bildtyp des aktuellen Videobildes unbekannt ist oder erkannt wird, dass es kein I-Frame ist, um die Zeitkomplexität des Bildblocks basierend auf einer Differenz zwischen dem Zwischenbildvoraussagewert des Bildblocks und einem originalen Pixelwert des Bildblocks zu bestimmen, und die Kapazitätskomplexität des Bildblocks, basierend auf einer Differenz zwischen dem Zwischenbildvoraussagewert des Bildblocks und dem originalen Pixelwert des Bildblocks zu bestimmen, oder wenn der Bildtyp des aktuellen Videobildes als I-Frame erkannt wird, die Kapazitätskomplexität des Bildblocks basierend auf einer Differenz zwischen dem Zwischenbildvoraussagewert des Bildblocks und dem originalen Pixelwert des Bildblocks zu bestimmen; und
eine Einheit zur Bestimmung der Komplexität, die konfiguriert ist, wenn der Bildtyp des aktuellen Videobildes unbekannt ist oder nicht als I-Frame erkannt wird, um die geringste Zeitkomplexität und Kapazitätskomplexität als die Komplexität des Bildblocks zu betrachten, oder, wenn der Bildtyp des aktuellen Videobildes als I-Frame erkannt wird, um die Kapazitätkomplexität als die Komplexität des Bildblocks zu betrachten, und um die Komplexität aller Bildblöcke zwecks Erhalt der Komplexität des aktuellen Videobildes zu kombinieren, wobei die erhaltene Komplexität für die Einstellung einer Bit-Rate des Live-Videostromes benutzt wird,
wobei die Bestimmungseinheit der Zeit-Kapazität-Komplexität weiter konfiguriert ist, um:

eine diskrete Kosinustransformation in der Differenz zwischen dem Zwischenbildvoraussagewert des Bildblocks und dem originalen Pixelwert des Bildblocks durchzuführen und eine Summe der absoluten Koeffizientenwerte nach der diskreten Kosinustransformation als die Zeitkomplexität des Bildblocks zu betracheten, und
eine diskrete Kosinustransformation in der Differenz zwischen dem Zwischenbildvoraussagewert des Bildblocks und des original Pixelwertes des Bildblocks durchzuführen und eine Summme der absoluten Koeffizientenwerte nach der diskreten Kosinustransformation als die Kapazitätkomplexität des Bildblocks zu betrachten.

**10.** Ein Datenverarbeitungsgerät zur Bestimmung der Komplexität eines Videobildes in einem Live-Videostrom, das Mittel für die Anwendung der Methode gemäss irgendeinem der Ansprüche 1-8 umfasst.

**Revendications**

1. Une méthode de détermination de la complexité d'une image vidéo dans un flux vidéo en temps réel, comprenant les pas suivants:

   obtenir (S1) l'image vidéo en cours à traiter, en divisant l'image vidéo en cours par un nombre déterminé de blocs d'images;
   lorsque le type d'image vidéo en cours est inconnu ou est reconnu comme n'étant pas un I-frame,
   calculer (S1) une valeur de prédiction d'interimages et une valeur de prédiction d'interimages d'un bloc d'images;
   déterminer (S3) la complexité en temps du bloc d'images à partir de la différence entre la valeur de prédiction d'interimages du bloc d'images et la valeur des pixels d'origine du bloc d'images; et déterminer la complexité en espace du bloc d'images à partir de la différence entre la valeur de prédiction d'interimages du bloc d'images et la valeur des pixels d'origine du bloc d'images; et
   prendre (S4) la complexité en temps et la complexité en espace les plus petites comme complexité du bloc d'images;
   lorsque le type d'image vidéo en cours est reconnu comme étant un I-frame,
   calculer uniquement la valeur de prédiction d'interimages du bloc d'images;
   déterminer la complexité en espace du bloc d'images à partir de la différence entre la valeur de prédiction d'interimages du bloc d'images et la valeur des pixels d'origine du bloc d'images; et
   prendre la complexité en espace comme complexité du bloc d'images; et
   ajouter la complexité de chaque bloc d'images ensemble pour obtenir la complexité de l'image vidéo en cours;
   où la complexité obtenue est utilisée pour définir le débit binaire du flux vidéo en temps réel;
   où la détermination de la complexité en temps du bloc d'images comprend les pas suivants:
   exécuter une transformation en cosinus discrète de la différence entre la valeur de prédiction d'interimages du bloc d'images et la valeur des pixels d'origine du bloc d'images, et prendre la somme des valeurs absolues des coefficients après la transformation en cosinus discrète comme complexité en temps du bloc d'images; et
   où la détermination de la complexité en espace du bloc d'images comprend les pas suivants :
   exécuter une transformation en cosinus discrète de la différence entre la valeur de prédiction d'interimages du bloc d'images et la valeur des pixels d'origine du bloc d'images, et prendre la somme des valeurs absolues des coefficients après la transformation en cosinus discrète comme complexité en espace du bloc d'images.

2. La méthode de la revendication 1, où le calcul de la valeur de prédiction d'interimages du bloc d'images comprend les pas suivants:

   obtenir les coordonnées d'un sommet désigné du bloc d'images et déterminer la largeur et la hauteur d'un rang de recherche de mouvements;
   à partir des coordonnées du sommet désigné et de la largeur et la hauteur du rang de recherche de mouvements, déterminer plusieurs séries de paramètres de recherche, où chaque série de paramètres de recherche comprend des coordonnées horizontale et verticale;
   calculer le résultat de recherche correspondant de chaque série de paramètres de recherche, respectivement, et prendre la valeur de recherche correspondant au résultat de recherche minimum comme valeur de recherche adaptée; et
   à partir de la valeur des pixels de l'image vidéo qui précède immédiatement l'image vidéo en cours et la valeur de recherche adaptée, déterminer la valeur de prédiction d'interimages du bloc d'images.

3. La méthode de la revendication 2, où plusieurs séries de paramètres de recherche sont déterminés sur la base de formules suivantes:

$$|y - y_0| \le SH;$$

et

$$|x - x_0| \le SW,$$

où $x$ est une coordonnée horizontale du sommet désigné; y est une coordonnée verticale du sommet désigné; $y_0$ est une coordonnée verticale d'un paramètre de recherche; SH est la hauteur du rang de recherche de mouvement;

$x_0$ est une coordonnée horizontale d'un paramètre de recherche; et *SW* est la largeur du rang de recherche de mouvement.

4. La méthode de la revendication 3, où une valeur de recherche adaptée est déterminée à partir de la formule suivante:

$$\underset{y_0, x_0}{argmin} \sum_{s=0}^{bh-1} \sum_{t=0}^{bw-1} \left| P_p(y + s, x + t) - P_{p-1}(s + y_0, t + x_0) \right| ,$$

où *bh* est la hauteur du bloc d'images; *bw* est la largeur du bloc d'images; *s* est un nombre entier de 0 à *bh-1*; *t* est un nombre entier de 0 à *bw-1*; $P_p$ *(y + s, x + t)* est une valeur de pixels d'un pixel en coordonnées *(y + s, x + t)* dans l'image vidéo en cours; et $P_{p-1}$ *(s + y_0, t + x_0)* est la valeur d'un pixel en coordonnées $(s + y_0, t + x_0)$ dans l'image vidéo qui précède immédiatement l'image vidéo en cours.

5. La méthode de la revendication 4, où la valeur de prédiction d'interimages du bloc d'images est déterminée à partir de la formule suivante:

$$B_{inter} (i, j) = P_{p-1} (i + y_0, j + x_0)$$

où $B_{inter}$ *(i,j)* est la valeur de prédiction d'interimages correspondant à un pixel en coordonnées *(i,j)* dans le bloc d'images; $P_{p-1}$ *(i + y_0, j + x_0)* est la valeur d'un pixel en coordonnées $(i + y_0, j + x_0)$ dans l'image vidéo qui précède immédiatement l'image vidéo en cours; *i* est un nombre entier de 0 à *bh*-1; et *j* est un nombre entier de 0 à *bw*-1.

6. La méthode de la revendication 1, où le calcul de la valeur de prédiction d'interimages d'un bloc d'images comprend les pas suivants:

obtenir les valeurs de prédiction de candidats du bloc d'images dans une série de directions spécifiées et calculer la valeur d'évaluation correspondant à la valeur de prédiction de candidats dans chaque direction spécifiée; et
prendre la valeur de prédiction de candidats correspondant à la valeur d'évaluation minimum comme valeur de prédiction d'interimages du bloc d'images.

7. La méthode de la revendication 6, où la valeur d'évaluation correspondant à la valeur de prédiction de candidats dans une direction cible spécifiée parmi les valeurs de prédiction de candidats dans une série de directions spécifiées est déterminée à partir de la formule suivante:

$$\text{SAD} = \sum_{s=0}^{bh-1} \sum_{t=0}^{bw-1} \left| P_p(y + s, x + t) - C_{intra}(s, t) \right| ,$$

où *SAD* est la valeur d'évaluation correspondant à la valeur de prédiction de candidats dans la direction cible spécifiée; *bh* est la hauteur du bloc d'images; *bw* est la largeur du bloc d'images; *s* est un nombre entier de 0 à *bh-1*; *t* est un nombre entier de 0 à *bw-1*; $C_{intra}$ *(s, t)* est la valeur de prédiction de candidats d'un pixel en coordonnées *(s, t)* dans la direction cible spécifiée; et $P_p$*(y + s, x + t)* est la valeur du pixel en coordonnées *(y + s, x + t)* dans l'image vidéo en cours.

8. La méthode de la revendication 1, où, une fois qu'on obtient l'image vidéo en cours à traiter, elle comprend en outre les pas suivants:

reconnaître la résolution de l'image vidéo en cours; et
effectuer le sous-échantillonnage de l'image vidéo en cours pour obtenir l'image vidéo sous-échantillonnée si la résolution est supérieure ou égale à un seuil de résolution spécifié; où la complexité de l'image vidéo sous-échantillonnée devient la complexité de l'image vidéo en cours.

9. Un dispositif pour déterminer la complexité d'une image vidéo dans un flux vidéo en temps réel, comprenant les éléments suivants:

une unité de calcul de la valeur de prédiction, configurée pour obtenir une image vidéo en cours à traiter, et pour calculer une valeur de prédiction d'interimages et une valeur de prédiction d'interimages d'un bloc d'images, une fois que l'image vidéo en cours est divisée par le nombre spécifié de blocs d'images, quand le type d'image vidéo en cours est inconnu ou est reconnu comme n'étant pas un I-frame; ou pour calculer uniquement la valeur de prédiction d'interimages d'un bloc d'images, une fois que l'image vidéo en cours est divisée par un nombre spécifié de blocs d'images, quand le type d'image vidéo en cours est reconnu comme étant l'I-frame;

une unité de détermination de la complexité en temps et en espace, configurée pour que, lorsque le type d'image de l'image vidéo en cours est inconnu ou est reconnu comme n'étant pas l'I-frame, déterminer la complexité en temps du bloc d'images à partir de la différence entre la valeur de prédiction d'interimages du bloc d'images et la valeur des pixels d'origine du bloc d'images et la complexité en espace du bloc d'images à partir de la différence entre la valeur de prédiction d'interimages du bloc d'images et la valeur des pixels d'origine du bloc d'images, ou lorsque le type d'image de l'image vidéo en cours est reconnu comme étant l'I-frame, déterminer la complexité en espace du bloc d'images à partir de la différence entre la valeur de prédiction d'interimages du bloc d'images et la valeur des pixels d'origine du bloc d'images; et

une unité de détermination de la complexité, configurée pour que, lorsque le type d'image de l'image vidéo en cours est inconnu ou est reconnu comme n'étant pas l'I-frame, prendre les plus petites des complexité en temps et complexité en espace comme complexité du bloc d'images, ou lorsque le type d'image de l'image vidéo en cours est reconnu comme étant l'I-frame, prendre la complexité en espace comme complexité du bloc d'images; et ajouter la complexité de chaque bloc d'images ensemble pour obtenir la complexité de l'image vidéo en cours; où la complexité obtenue est utilisée pour définir le débit binaire du flux vidéo en temps réel;

où l'unité de détermination de la complexité en temps et en espace est en outre configurée pour effectuer les pas suivants:

exécuter une transformation en cosinus discrète de la différence entre la valeur de prédiction d'interimages du bloc d'images et la valeur des pixels d'origine du bloc d'images, et prendre la somme des valeurs absolues des coefficients après la transformation en cosinus discrète comme complexité en temps du bloc d'images; et

exécuter une transformation en cosinus discrète de la différence entre la valeur de prédiction d'interimages du bloc d'images et la valeur des pixels d'origine du bloc d'images, et prendre la somme des valeurs absolues des coefficients après la transformation en cosinus discrète comme complexité en espace du bloc d'images.

10. Un dispositif de traitement de données pour déterminer la complexité d'une image vidéo dans un flux vidéo en temps réel, comprenant les moyens pour appliquer la méthode de l'une des revendications 1 à 8.

S1

Obtaining a current video frame to be processed and calculating an interframe prediction value and intraframe prediction value of each picture block after the current video frame is divided into a specified number of picture blocks

S3

Determining time complexity of the picture block based on a difference between the interframe prediction value of the picture block and an original pixel value of the picture block and determining space complexity of the picture block based on a difference between the intraframe prediction value of the picture block and the original pixel value of the picture block

S5

Taking the smaller of the time complexity and the space complexity as the complexity of the picture block and determining the complexity of the current video frame based on the complexity of each of a specified number of the picture blocks

FIG. 1

Apparatus for determining complexity of a video frame

Prediction value calculation unit

Time-space complexity determination unit

Complexity determination unit

FIG. 2

Processor

Internal bus

Memory

Computer
program

Apparatus for determining complexity of a video frame

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015319437 A1